# EUROPÄISCHE PATENTSCHRIFT

(11) **EP 1 893 376 B1**
(45) Veröffentlichungstag und Bekanntmachung des Hinweises auf die Patenterteilung: **17.12.2014**
(21) Anmeldenummer: 06742925.8
(22) Anmeldetag: 16.05.2006
(51) Int. Cl.: B23B 27/04

(54) **WERKZEUGHALTERSYSTEM**
TOOL HOLDER SYSTEM
SYSTEME PORTE-OUTIL

(30) Priorität: 31.05.2005 DE 102005024746
(43) Veröffentlichungstag der Anmeldung: 05.03.2008
(73) Patentinhaber: Hartmetall-Werkzeugfabrik Paul Horn GmbH, 72072 Tübingen (DE)
(72) Erfinder: SCHÄFER, Hans, 72810 Gomaringen (DE); THURAU, Heinz, 72116 Mössingen (DE)
(74) Vertreter: Keck, Stephan
(86) Internationale Anmeldenummer: PCT/EP2006/004577
(87) Internationale Veröffentlichungsnummer: WO 2006/128576

(56) Entgegenhaltungen:
- WO-A-00/51768
- DE-A1- 3 130 484
- DE-U1- 8 605 098
- GB-A- 1 166 614
- US-A- 3 324 529
- US-A1- 2005 019 118

## Beschreibung

Die Erfindung bezieht sich auf ein Werkzeughaltersystem, mit einer Grundträgerplatte, von der sich für die Verbindung mit einer Werkzeugmaschine, insbesondere Drehmaschine, ein Aufnahmeteil in Richtung einer Halterachse erstreckt, mit einer Werkzeugträgerplatte, an der über ein Zwischenstück ein spanendes Werkzeug anbringbar ist, und mit einer einstellbaren Führung zum Einstellen der relativen Lage der beiden Platten zueinander.

Werkzeughaltersysteme dieser Art sind bekannt und beispielsweise unter der Bezeichnung "Höhenverstellbarer Drehhalter" im Handel erhältlich. Mittels der einstellbaren Führung, die bei derartigen Werkzeughaltersystemen eine Relativbewegung zwischen Grundträgerplatte und Werkzeugträgerplatte über einen Einstellbereich von etwa 1 mm oder weniger ermöglicht, lässt sich bei derartigen Werkzeughaltersystemen eine Höhenkorrektur durchführen, um Werkzeugtoleranzen auszugleichen oder bei Nachschleifarbeiten am betreffenden Zerspanungswerkzeug eine erforderliche Korrektur vorzunehmen.

Die DE 31 30 484 A1 zeigt beispielsweise einen Schnellwechselwerkzeughalter, insbesondere für Drehmaschinen, der einen an der Maschine anzubringenden Schaft und einen an diesem lösbar befestigten Kopf besitzt, an dem ein Schneideinsatz auswechselbar angebracht ist. Ein weiteres Werkzeughaltersystem, bei dem der Schneideinsatz bezüglich seiner Längsrichtung im Werkzeughalter durch eine Stellschraube verschiebbar ist, ist aus der US 3,324,529 A bekannt.

Der vorliegenden Erfindung liegt die Aufgabe zugrunde, ein Werkzeughaltersystem der genannten Art zur Verfügung zu stellen, das besonders vielseitig einsetzbar ist. Erfindungsgemäß löst diese Aufgabe ein Werkzeughaltersystem, das die Merkmale des Patentanspruches 1 in seiner Gesamtheit aufweist.

Dadurch, dass gemäß dem kennzeichnenden Teil des Anspruches 1 das den eigentlichen Werkzeugträger bildende Zwischenstück sich seitlich längs Werkzeugträgerplatte und Grundträgerplatte erstreckt, bietet sich die Möglichkeit, bei gleichbleibendem Grundaufbau der tragenden Basis für das Zerspanungswerkzeug, also bei jeweils gleichbleibender Bauweise von Grundträgerplatte mit Aufnahmeteil sowie der einstellbaren Führung für die Werkzeugträgerplatte, eine für einen gewünschten Einsatzzweck optimale Systemkonfiguration zu erreichen, indem lediglich das an der Werkzeugträgerplatte befindliche Zwischenstück verwendungsspezifisch unterschiedlich gestaltet wird.

So kann durch Wahl der quer zur Halterachse gemessenen Erstreckung des Zwischenstückes auf einfache Weise ein gewünschter Versatz der Schneide des Zerspanungswerkzeuges gegenüber der Halterachse erreicht werden. Da sich das Zwischenstück an die Werkzeugträgerplatte unmittelbar anschließt, vorzugsweise mit dieser einstückig ist, sind Kompaktheit und hohe Steifigkeit des Systems gewährleistet.

In eben so einfacher Weise ist die auf die Halterachse bezogene Längsposition des Zerspanungswerkzeuges wählbar, indem die parallel zur Halterachse gemessene Längserstreckung des Zwischenstückes entsprechend gewählt wird. Das Zwischenstück an der Werkzeugträgerplatte ist um, bezogen auf die Halterachse, einen größeren Abstand zwischen Zerspanungswerkzeug und Aufnahmeteil vorzusehen, über das der Grundträgerplatte entgegengesetzte Ende hinaus verlängert.

Entsprechendes gilt für das dem Aufnahmeteil zugekehrte Ende des Zwischenstückes, das über das sich an das Aufnahmeteil anschließende Ende der Grundträgerplatte hinaus verlängert sein kann.

Eine solche langgestreckte Bauweise des Zwischenstückes ist besonders vorteilhaft, wenn am Zwischenstück ein langgestreckter Schneidwerkzeughalter aufgenommen werden soll, beispielsweise in der Weise, dass im Zwischenstück eine Führung für einen darin formschlüssig geführten, in zur Halterachse paralleler Richtung längseinstellbaren und festspannbaren Schneidwerkzeughalter vorgesehen ist.

Wenn die einstellbare Führung für die Höhenkorrektur zwischen Grundträgerplatte und Werkzeugträgerplatte eine Stellschraube aufweist, kann die Anordnung vorteilhafterweise so getroffen sein, dass der Schraubenkopf der Stellschraube in einer endseitigen Erweiterung der zugeordneten Gewindebohrung in der Grundträgerplatte versenkt ist. Dadurch ergibt sich eine besonders kompakte, raumsparende Bauweise ohne über den Plattenkörper vorstehende Einstellmittel.

Nachstehend ist die Erfindung anhand von in der Zeichnung dargestellten Ausführungsbeispielen im einzelnen erläutert.
Es zeigen:
- Fig.1: eine perspektivische Schrägansicht eines Ausführungsbeispiels des erfindungsgemäßen Werkzeughaltersystems;
- Fig.2: eine gegenüber Fig.1 in größerem Maßstab gezeichnete Stirnansicht des Ausführungsbeispiels von Fig.1;
- Fig.3: eine Draufsicht eines Ausführungsbeispiels;
- Fig.4: einen in größerem Maßstab gezeichneten Querschnitt des Ausführungsbeispiels von Fig. 1, entsprechend der Schnittlinie IV-IV von Fig.1 und
- Fig.5: eine der Fig.1 ähnliche perspektivische Schrägansicht eines weiteren Ausführungsbeispiels.

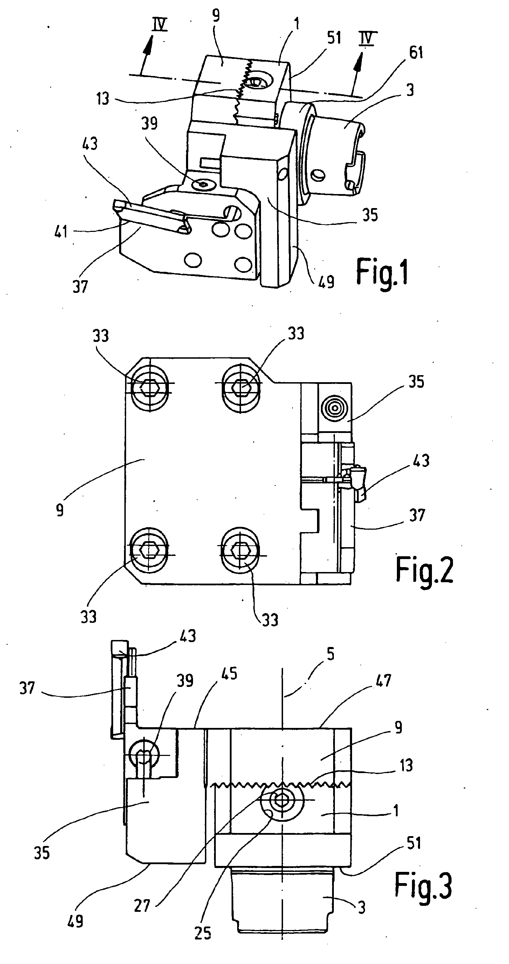

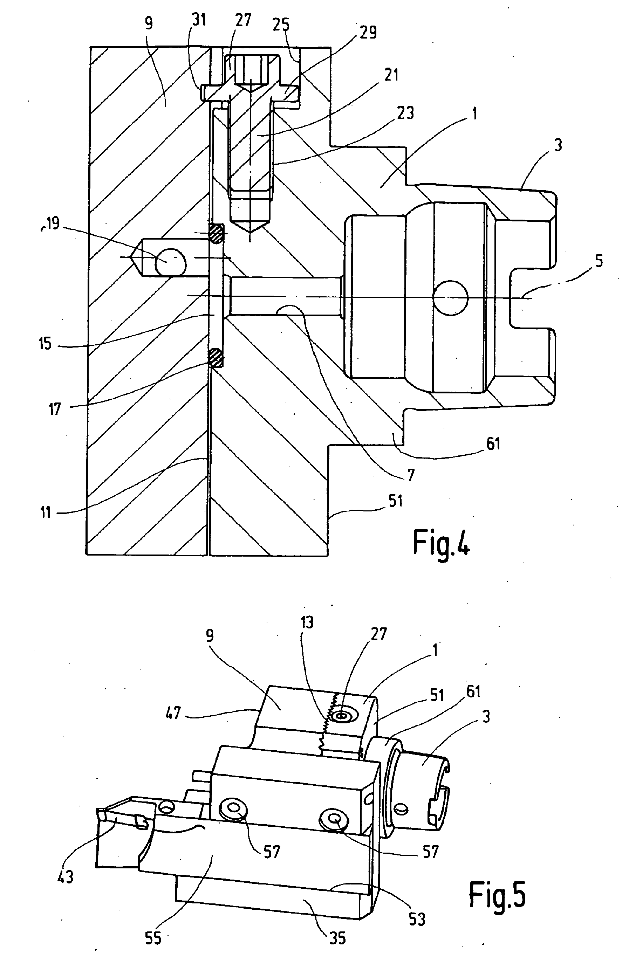

Fig. 1 zeigt ein Ausführungsbeispiel des erfindungsgemäßen Werkzeughaltersystems in Form eines sogenannten höheneinstellbaren Drehhalters. Hauptbestandteile eines solchen Systems sind eine Grundträgerplatte 1 von in etwa rechteckförmigen Umriß, an deren einer Breitseiten ein Aufnahmeteil 3 einstückig angeformt ist, das eine Halterachse 5 (Fig. 3 und 4) definiert. Das Aufnahmeteil 3 ist ein für die Verbindung mit einer Werkzeugmaschine dienendes, genormtes Anschlußteil (Hohlschaft DIN 69893) mit innerer Kühlmittelzufuhr über einen zur Achse 5 konzentrischen Kanal 7 (Fig. 4) in der Grundträgerplatte 1. An der dem Aufnahmeteil 3 abgekehrten Breitseite bildet die Grundträgerplatte 1 für eine an ihr anliegende Werkzeugträgerplatte 9 eine einstellbare Führung 11 mit parallelen Führungsrillen die durch eine Führungsverzahnung 13 gebildet ist.

Fig. 4 zeigt nähere Einzelheiten der inneren Elemente von Grundträgerplatte 1 und Werkzeugträgerplatte 9, nämlich eine endseitige Erweiterung 15 des Kühlmittelkanales 7, die Abdichtung dieser Erweiterung 15 gegenüber der Werkzeugträgerplatte 9 mittels O-Ring-Dichtung 17 und einen Anschlußkanal 19 in der Werkzeugträgerplatte, wodurch der Kühlmittelzustrom bis zum Bereich des Schneidwerkzeuges in üblicher Weise (nicht gezeigt) fortgesetzt wird. Als Stelleinrichtung für die verstellbare Führung 11 ist eine Stellschraube 21 vorgesehen, die in einer Gewindebohrung 23 der Grundträgerplatte 1 sitzt, wobei die Schraubenachse parallel zur einstellbaren Führung 11 verläuft. In dem gewindefreien Endabschnitt weist die Bohrung 23 der Grundträgerplatte 1 eine Erweiterung 25 auf, in der der Kopf 27 der Schraube 21 vollständig versenkt ist. Diese ist beim vorliegenden Beispiel eine Innensechskantschraube mit einem an den Kopf 27 angrenzenden Bund 29. Die Bohrung 23 in der Grundträgerplatte 1 befindet sich der einstellbaren Führung 11 und damit der Werkzeugträgerplatte 9 so eng benachbart, dass die endseitige Bohrungserweiterung 25 zur Werkzeugträgerplatte 9 hin offen ist. Letztere weist eine Mitnahmevertiefung 31 auf, in die der Rand des Bundes 29 der Stellschraube 21 eingreift. Wie ersichtlich, führt daher die Drehbewegung der Stellschraube 21 zu einer Einstellbewegung an der Führung 11, also einer Einstellung der relativen Lage der Platten 1 und 9 zueinander.

Wie aus Fig. 2 zu entnehmen ist, ist die Lageeinstellung der Platten 1 und 9 zueinander mittels vier Klemmschrauben 33 fixierbar, die in den Eckbereichen der Werkzeugträgerplatte 9 Langlöcher derselben durchgreifen, wobei die Köpfe der Klemmschrauben 33, in Entsprechung zu der Stellschraube 21, ebenfalls in endseitigen Erweiterungen der Langlöcher in der Werkzeugträgerplatte 9 versenkt sind.

Wie am deutlichsten aus Fig. 1 und 3 zu ersehen ist, ist an der Werkzeugträgerplatte 9 ein Zwischenstück 35 seitlich angeformt. Dieses besitzt eine blockförmige Gestalt mit einem, wenn man von einem auskragenden Werkzeughalterteil 37 absieht, in der Draufsicht (Fig. 3) etwa rechteckförmigem Umriß. Der Werkzeughalterteil 37 bildet eine durch eine Spannschraube 39 verklemmbare Aufnahmekassette 41 für eine Schneidplatte 43. Fig. 1 und 3 zeigen Beispiele, bei denen das Zwischenstück 35 sich längs der Platten 1 und 9 seitlich so erstreckt, dass das von dem Aufnahmeteil 3 abgekehrte hintere Ende 45 des Zwischenstückes 35 jeweils mit dem entsprechenden Ende 47 der Werkzeugträgerplatte 9 bündig ist. Bei dem Beispiel von Fig. 3 erstreckt sich das andere Ende 49 des Zwischenstückes 35 im wesentlichen bis zu dem das Aufnahmeteil 3 aufweisenden Ende 51 der Grundträgerplatte 1, während bei dem Beispiel von Fig. 1 dieses Ende 49 über das Ende 51 der Grundträgerplatte 1 hinaus neben dem Aufnahmeteil 3 vorsteht.

Fig. 5 zeigt ein Beispiel, bei dem das Zwischenstück 35 langgestreckter ausgebildet ist, so dass es über das Ende 51 der Platte 1 und das Ende 47 der Platte 9 jeweils axial (bezogen auf die Halterachse 5) vorsteht. Das Zwischenstück 35 kann daher zur Bildung einer langgestreckten, schwalbenschwanzartigen Führung 53 zur formschlüssigen Führung eines darin längs verschiebbaren, langgestreckten Werkzeughalters 55 für die Schneidplatte 43 dienen, wobei Keile 57 mit versenkten Schrauben zur Verklemmung der Führung 53 dienen.

Wie bereits oben erwähnt, hat die Grundträgerplatte 1 die Form eines im Umriß im großen ganzen rechteckförmigen Körpers, wobei, wie besonders deutlich aus Fig. 3 und 4 zu ersehen ist, das Aufnahmeteil 3 an der das Ende 51 bildenden Breitseite der Platte zentral gelegen angeformt ist, so dass die durch den Hohlschaft des Aufnahmeteiles 3 definierte Halterachse 5 sich durch den Zentralbereich der Platte 1 erstreckt. Wie am deutlichsten aus Fig. 4 zu entnehmen ist, geht das Aufnahmeteil 3 außenseitig über einen größeren Durchmesser als das Aufnahmeteil 3 aufweisenden Ringkörper 61 in die ebene Endfläche der Platte 1 an deren Ende 51 über.

Wie Fig. 1 und insbesondere Fig. 3 in der Draufsicht deutlich zeigen, ist das Zwischenstück 35, das in Form eines Blockes mit in der Draufsicht ebenfalls rechteckförmigem Umriß gestaltet ist und an dem dem Aufnahmeteil 3 zugewandten Ende 49 und an dem dazu entgegengesetzten Ende 45 ebenfalls eine ebene rechteckförmige Endfläche aufweist, in der quer zur Halterachse 5 gemessenen Richtung verhältnismäßig dick ausgebildet. Mit anderen Worten gesagt, beträgt die senkrecht zur Halterachse 5 gemessene Dikke des Zwischenstückes 35 zumindest die Hälfte der in dieser Richtung gemessenen Dicke von Grundträgerplatte 1 und Werkzeugträgerplatte 9. Entsprechend dieser Abmessung des Zwischenstückes 35 und der Anordnung des Werkzeughalterteiles 37 im Bereich der von der Halterachse 5 entfernten Außenseite des Zwischenstückes 35 ist ein verhältnismäßig großer Achsabstand zwischen Schneidplatte 43 und Halterachse 5 erreichbar.

Wie aus Fig. 3 und 5 zu entnehmen ist, ist die in zur Halterachse 5 paralleler Richtung gemessene Länge des Zwischenstückes 35 zumindest näherungsweise so groß wie die in entsprechender Richtung gemessene, kombinierte Erstreckung der Platten 9 und 1. Bei dem Beispiel von Fig. 3 ist das Ende 45 des Zwischenstückes 35 mit der ebenen Endfläche der Werkzeugträgerplatte 9 an deren Ende 47 bündig, während das andere Ende 49 des Zwischenstückes 35 lediglich einen geringen Abstand zur Ebene der Platte 1 an deren Ende 51 besitzt.

Die einstellbare Führung 11 bildet an Grundträgerplatte 1 und Werkzeugträgerplatte 9 in Führungsrichtung verlaufende Führungsrillen, die durch die bereits erwähnte Verzahnung 13 gebildet sind, die in der bei solchen Führungsverzahnungen üblichen Weise die Form einer Mehrzahl von parallel verlaufenden Vertiefungen und Erhebungen besitzt.

Wie aus Fig. 4 zu entnehmen ist, befinden sich an der Führung 11 zwei verzahnungsfreie Bereiche. Zum einen ist dies der Bereich der Erweiterung 15, wo der Kühlmittelkanal 7 der Grundträgerplatte 1 in den Kanal 19 in der Werkzeugträgerplatte 9 übergeht. Zum andern ist die Werkzeugträgerplatte 9 in dem Bereich der Erweiterung 25 der Bohrung 23 der Grundträgerplatte 1 verzahnungsfrei, jedoch befindet sich in diesem Bereich die in die Endfläche der Platte 9 eingearbeitete Vertiefung 31, in die der Bund 29 der Stellschraube 21 eingreift.

## Patentansprüche

1. Werkzeughaltersystem, mit einer Grundträgerplatte (1), von der sich für die Verbindung mit einer Werkzeugmaschine, insbesondere Drehmaschine, ein Aufnahmeteil (3) in Richtung einer Halterachse (5) erstreckt, mit einer Werkzeugträgerplatte (9), an der über ein Zwischenstück (35) ein spanendes Werkzeug(43) anbringbar ist, und mit einer einstellbaren Führung (11) zum Einstellen der relativen Lage der beiden Platten (1 und 9) zueinander, **dadurch gekennzeichnet, dass** das Zwischenstück (35) sich seitlich an die Werkzeugträgerplatte (9) anschließt und sich längs beider Platten (1 und 9) über das der Grundträgerplatte (1) entgegengesetzte Ende (47) der Werkzeugträgerplatte (9) hinaus in zur Halterachse (5) paralleler Richtung erstreckt.

2. Werkzeughaltersystem nach einem der Ansprüche 1, **dadurch gekennzeichnet, dass** sich das Zwischenstück (35) zumindest bis in die Nähe des sich an das Aufnahmeteil (3) anschließenden Endes (51) der Grundträgerplatte (1) erstreckt.

3. Werkzeughaltersystem nach einem der Ansprüche 1 bis 2, **dadurch gekennzeichnet, dass** sich das Zwischenstück (35) über das sich an das Aufnahmeteil (3) anschließende Ende (51) der Grundträgerplatte (1) hinaus in zur Halterachse (5) paralleler Richtung erstreckt.

4. Werkzeughaltersystem nach einem der Ansprüche 1 bis 3, **dadurch gekennzeichnet, dass** die einstellbare Führung (11) eine in der Grundträgerplatte (1) sitzende Stellschraube (21) aufweist, deren Schraubenkopf (27) in einer endseitigen Erweiterung (25) der zugeordneten Gewindebohrung (23) in der Grundträgerplatte (1) versenkt ist.

5. Werkzeughaltersystem nach Anspruch 4, **dadurch gekennzeichnet, dass** als Stellschraube eine Bundschraube (21) vorgesehen ist.

6. Werkzeughaltersystem nach Anspruch 5, **dadurch gekennzeichnet, dass** die sich in der Einstellrichtung der einstellbaren Führung (11) verlaufende Bohrung (23) in der Grundträgerplatte (1) zu der einstellbaren Führung (11) so benachbart ist, dass die endseitige Erweiterung (25) der Bohrung (23) an der Führung (11) zur Werkzeugträgerplatte (9) hin offen ist und der Bund (29) der Stellschraube (21) in eine Mitnahmevertiefung (31) der Werkzeugträgerplatte (9) eingreift.

7. Werkzeughaltersystem nach einem der Ansprüche 1 bis 6, **dadurch gekennzeichnet, dass** das Zwischenstück (35) eine Einspannvorrichtung (39, 41; 57) für ein Schneidwerkzeug (43) oder einen Werkzeughalter (55) aufweist.

8. Werkzeughaltersystem nach Anspruch 7, **dadurch gekennzeichnet, dass** die Einspanvorrichtung eine Führung (53) für einen darin formschlüssig geführten, in zur Halterachse (5) paralleler Richtung längseinstellbaren und festspannbaren Schneidwerkzeughalter (55) aufweist.

## Claims

1. Tool holder system having a base support plate (1) from which a receiving part (3) extends in the direction of a holder axis (5) for connection to a machine tool, in particular a turning lathe, having a tool support plate (9) to which a cutting tool (43) can be attached by way of an intermediate piece (35), and having an adjustable guide (11) for setting the relative position of both plates (9 and 11) to one another, **characterized in that** the intermediate piece (35) is laterally connected to the tool support plate (1) and extends along both plates (9 and 11) beyond the end (47) of the tool support plate (9) which end (47) is opposite the base support plate (1) in the direction parallel to the holder axis (5).

2. The tool holder system according to claim 1, **characterized in that** the intermediate piece (35) extends at least into the vicinity of the end (51) of the base support plate (1), which end (51) adjoins the receiving part (3).

3. The tool holder system according to one of claims 1 to 2, **characterized in that** the intermediate piece (35) extends beyond the end (51) of the base support plate (1) in the direction parallel to the holder axis (5), which end (51) adjoins the receiving part (3).

4. The tool holder system according to one of claims 1 to 3, **characterized in that** the adjustable guide (11) has a set screw (21) which sits in the base support plate (1), the screw head (27) of the set screw (21) being countersunk in an end widening (25) of the associated threaded hole (23) in the base support plate (1).

5. The tool holder system according to claim 4, **characterized in that** the set screw is a collar screw (21).

6. The tool holder system according to claim 5, **characterized in that** the bore hole (23) which runs in the adjustment direction of the adjustable guide (11) in the base support plate (1) is adjacent to the adjustable guide (11) such that the end widening (25) of the bore hole (23) on the guide (11) is open toward the tool support plate (9) and the collar (29) of the set screw (21) engages a driver depression (31) of the tool support plate (9).

7. The tool holder system according to one of claims 1 to 6, **characterized in that** the intermediate piece (35) has a clamping device (39, 41, 57) for a cutting tool (43) or a tool holder (55).

8. The tool holder system according to claim 7, **characterized in that** the clamping device has a guide (53) for a cutting tool holder (55) which can be clamped and adjusted lengthwise in the direction parallel to the holder axis (5) and which is guided positively therein.

## Revendications

1. Système porte-outil, comprenant une plaque de support de base (1), depuis laquelle un élément de réception (3) s'étend en direction d'un axe de maintien (5) afin d'établir la liaison avec une machine-outil, en particulier un tour, comprenant une plaque de support d'outil (9), au niveau de laquelle un outil d'usinage par enlèvement de copeaux (43) peut être installé par l'intermédiaire d'une pièce intermédiaire (35), et comprenant une glissière de guidage (11) ajustable servant à ajuster la position relative des deux plaques (1 et 9) l'une par rapport à l'autre, **caractérisé en ce que** la pièce intermédiaire (35) se trouve dans le prolongement latéralement de la plaque de support d'outil (9) et s'étend dans une direction parallèle à l'axe de maintien (5), le long des deux plaques (1 et 9), au-delà de l'extrémité (47), opposée à la plaque de support de base (1), de la plaque de support d'outil (9).

2. Système porte-outil selon la revendication 1, **caractérisé en ce que** la pièce intermédiaire (35) s'étend au moins jusqu'à la proximité de l'extrémité (51), se trouvant dans le prolongement de l'élément de réception (3), de la plaque de support de base (1).

3. Système porte-outil selon l'une quelconque des revendications 1 à 2, **caractérisé en ce que** la pièce intermédiaire (35) s'étend dans une direction parallèle à l'axe de maintien (5) au-delà de l'extrémité (51), se trouvant dans le prolongement de l'élément de réception (3), de la plaque de support de base (1).

4. Système porte-outil selon l'une quelconque des revendications 1 à 3, **caractérisé en ce que** la glissière de guidage (11) ajustable présente une vis de réglage (21) siégeant dans la plaque de support de base (1), dont la tête de vis (27) est enfoncée dans une extension (25) côté extrémité de l'alésage fileté (23) associé dans la plaque de support de base (1).

5. Système porte-outil selon la revendication 4, **caractérisé en ce qu'**est prévue, en tant que vis de réglage, une vis d'assemblage à embase (21).

6. Système porte-outil selon la revendication 5, **caractérisé en ce que** l'alésage (23) s'étendant dans la direction d'ajustage de la glissière de guidage (11) ajustable dans la plaque de support de base (1) est adjacent à la glissière de guidage (11) ajustable de telle sorte que l'extension (25) côté extrémité de l'alésage (23) est ouverte au niveau de la glissière de guidage (11) en direction de la plaque de support d'outil (9), et **en ce que** l'embase (29) de la vis de réglage (21) vient en prise avec un renfoncement d'entraînement (31) de la plaque de support d'outil (9).

7. Système porte-outil selon l'une quelconque des revendications 1 à 6, **caractérisé en ce que** la pièce intermédiaire (35) présente un dispositif de serrage (39, 41 ; 57) pour un outil de coupe (43) ou pour un porte-outil (55).

8. Système porte-outil selon la revendication 7, **caractérisé en ce que** le dispositif de serrage présente une glissière de guidage (53) pour un porte-outil de coupe (55) guidé dans la glissière de guidage par complémentarité de forme, ajustable en longueur dans une direction parallèle à l'axe de maintien (5) et pouvant être bloqué par serrage.
